# FASCICULE DE BREVET EUROPEEN

(11) **EP 2 272 713 B1**
(45) Date de publication et mention de la délivrance du brevet: **28.03.2012**
(21) Numéro de dépôt: 10290374.7
(22) Date de dépôt: 06.07.2010
(51) Int. Cl.: B60N 2/58

(54) **Procédé de réalisation d'un surtapis de véhicule automobile**
Herstellungsverfahren eines Teppichs in einem Kraftfahrzeug
Autoseat carpet manufactoring process

(30) Priorité: 08.07.2009 FR 0903386
(43) Date de publication de la demande: 12.01.2011
(73) Titulaire: Centre d'étude et de recherche pour l'automobile (CERA), 51100 Reims (FR)
(72) Inventeur: Ribes, Stéphane, 51140 Romain (FR)
(74) Mandataire: Sayettat, Julien Christian

(56) Documents cités:
- US-A- 5 669 670

## Description

L'invention concerne un procédé de réalisation d'un surtapis de véhicule automobile et un surtapis obtenu par un tel procédé.

Il est connu de mettre en oeuvre un procédé de réalisation d'un surtapis de véhicule automobile, ledit surtapis comprenant une couche fibreuse de revêtement et une sous-couche de matériau élastiquement compressible, par exemple une mousse, ledit surtapis comprenant en outre un moyen de masquage de sa tranche, par exemple sous forme de surjet ou de ganse rapportée, ledit procédé comprenant les étapes suivantes :
- réaliser un format à partir d'un complexe comprenant ladite couche fibreuse et ladite sous-couche,
- associer, par exemple par couture, audit format le long d'une bande périphérique ledit moyen de masquage.

Dans le cas d'un surtapis d'épaisseur générale faible, notamment inférieure à 10 mm, une telle réalisation conduit à un surtapis présentant une bonne finition périphérique.

En revanche, dans le cas de surtapis épais, par exemple d'épaisseur générale supérieure ou égale à 20 mm, on obtient une finition périphérique insatisfaisante, pouvant présenter un aspect bosselé.

L'invention a pour but de pallier cet inconvénient.

A cet effet, et selon un premier aspect, l'invention propose un procédé de réalisation d'un surtapis de véhicule automobile, ledit surtapis comprenant une couche fibreuse de revêtement et une sous-couche de matériau élastiquement compressible comprenant un composant fusible, ledit surtapis comprenant en outre un moyen de masquage de sa tranche, ledit procédé comprenant les étapes suivantes :
- réaliser un format à partir d'un complexe comprenant ladite couche fibreuse et ladite sous-couche,
- réaliser un écrasement à chaud d'une bande périphérique dudit format, la température appliquée étant définie de façon à permettre une compression périphérique irréversible de ladite sous-couche,
- associer audit format le long de ladite bande périphérique ledit moyen de masquage.

Ainsi, le moyen de masquage est disposé sur une zone de faible épaisseur, ce qui permet d'obtenir une bonne finition périphérique.

Selon un deuxième aspect, l'invention propose un surtapis réalisé par un tel procédé.

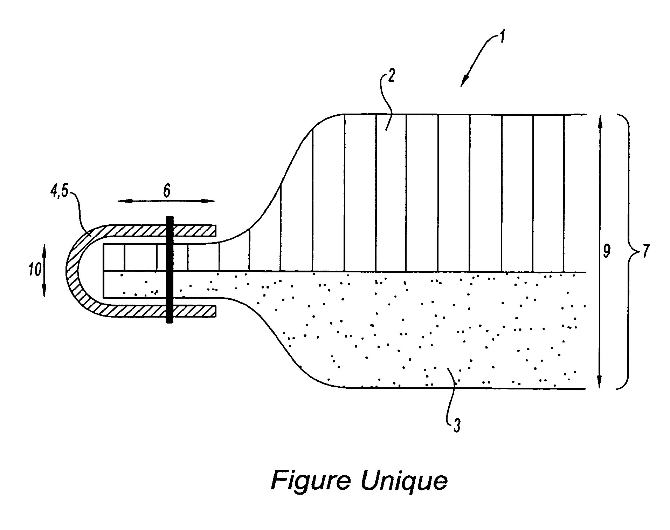

D'autres particularités et avantages de l'invention apparaîtront dans la description qui suit, faite en référence à la figure jointe qui est une vue schématique en coupe partielle d'un surtapis selon une réalisation.

En référence à la figure, on décrit un procédé de réalisation d'un surtapis 1 de véhicule automobile, ledit surtapis comprenant une couche fibreuse 2 de revêtement - notamment à base de tuft ou aiguilleté - et une sous-couche 3 de matériau élastiquement compressible - notamment une mousse ou un feutre -, ledit matériau comprenant un composant fusible - notamment la mousse étant fusible ou le feutre comprenant fibres fusibles -, ledit surtapis comprenant en outre un moyen de masquage 4 - notamment un surjet ou une ganse 5, telle qu'illustrée sur la figure - de sa tranche, ledit procédé comprenant les étapes suivantes :
- réaliser un format à partir d'un complexe 7 comprenant ladite couche fibreuse et ladite sous-couche,
- réaliser un écrasement à chaud d'une bande 6 périphérique dudit format, la température appliquée étant définie de façon à permettre une compression périphérique irréversible de ladite sous-couche,
- associer - notamment par couture 8, telle que représentée sur la figure, ou soudure - audit format le long de ladite bande périphérique ledit moyen de masquage.

Par ganse 5, on entend une bande souple - notamment textile - repliée contre les deux faces de la bande périphérique 6 en masquant la tranche du surtapis 1.

Selon la réalisation représentée, la couche fibreuse 2 comprend des fibres fusibles, la température appliquée lors de l'étape d'écrasement à chaud étant définie de façon à permettre une compression irréversible de ladite couche fibreuse.

De façon non représentée, un dispositif d'écrasement à chaud d'une bande 6 périphérique d'un format de complexe 7 peut être agencé comme suit : ledit dispositif comprend un cadre, de géométrie correspondant à ladite bande, et un support, ledit cadre étant actionnable en translation vers ledit support afin de permettre un pincement dudit format entre les deux, ledit dispositif comprenant en outre un moyen de chauffage, notamment sous forme de résistance électrique.

On décrit à présent un surtapis 1 de véhicule automobile réalisé par un procédé tel que décrit ci-dessus, ledit surtapis comprenant un format - notamment d'épaisseur générale 9 supérieure ou égale à 20 mm -, la sous-couche 3 pouvant notamment présenter une épaisseur générale supérieure ou égale à 10 mm, ledit format présentant une bande 6 périphérique écrasée de façon irréversible - notamment d'épaisseur 10 inférieure à 5 mm -, un moyen de masquage 4 de la tranche dudit surtapis - notamment sous forme de surjet ou de ganse 5 telle que représentée sur la figure - étant associé le long de ladite bande périphérique.

Lorsqu'il est dit que la bande 6 est écrasée de façon irréversible, cela signifie qu'elle se maintient sous forme écrasée en l'absence de tout moyen spécifique de maintien, et notamment le moyen de masquage 4.

De façon non représentée, il peut être prévu qu'un écrasement soit réalisé dans d'autres zones que la bande périphérique 6, par exemple pour réaliser un motif tel qu'un logo.

## Revendications

1. Procédé de réalisation d'un surtapis (1) de véhicule automobile, ledit surtapis comprenant une couche fibreuse (2) de revêtement et une sous-couche (3) de matériau élastiquement compressible, ledit matériau comprenant un composant fusible, ledit surtapis comprenant en outre un moyen de masquage (4) de sa tranche, ledit procédé étant **caractérisé en ce qu'**il comprend les étapes suivantes :
• réaliser un format à partir d'un complexe (7) comprenant ladite couche fibreuse et ladite sous-couche,
• réaliser un écrasement à chaud d'une bande (6) périphérique dudit format, la température appliquée étant définie de façon à permettre une compression périphérique irréversible de ladite sous-couche,
• associer audit format le long de ladite bande périphérique ledit moyen de masquage.

2. Procédé selon la revendication 1, **caractérisé en ce qu'**il prévoit que la couche fibreuse (2) comprenne des fibres fusibles, la température appliquée lors de l'étape d'écrasement à chaud étant définie de façon à permettre une compression irréversible de ladite couche fibreuse.

3. Surtapis (1) de véhicule automobile réalisé par un procédé selon l'une quelconque des revendications 1 ou 2, ledit surtapis comprenant un format présentant une bande (6) périphérique écrasée de façon irréversible, un moyen de masquage (4) de la tranche dudit surtapis étant associé le long de ladite bande périphérique.

## Claims

1. Method of producing a motor vehicle overcarpet (1), said overcarpet comprising a fibrous covering layer (2) and an underlayer (3) of elastically compressible material, said material comprising a fusible component, said overcarpet also comprising a means (4) of masking the edge thereof, said method being **characterised in that** it comprises the following steps:
- producing a format from a complex (7) comprising said fibrous layer and said underlayer,
- effecting a hot crushing of a peripheral strip (6) of said format, the temperature applied being defined so as to provide an irreversible peripheral compression of said underlayer,
- associating said masking means with said format along said peripheral strip.

2. Method according to claim 1, **characterised in that** it provides for the fibrous layer (2) to comprise fusible fibres, the temperature applied during the hot crushing step being defined so as to afford an irreversible compression of said fibrous layer.

3. Motor vehicle overcarpet (1) produced by a method according to either one of claims 1 or 2, said overcarpet comprising a format having a peripheral strip (6) crushed irreversibly, a means (4) of masking the edge of said overcarpet being associated along said peripheral strip.

## Patentansprüche

1. Verfahren zur Herstellung eines Teppichs (1) in einem Kraftfahrzeug, wobei der Teppich eine Faserschicht (2) zur Beschichtung und eine Unterschicht (3) aus elastisch komprimierbarem Material umfasst, wobei das Material einen schmelzbaren Bestandteil umfasst, wobei der Teppich außerdem ein Mittel zur Abdeckung (4) seiner Kante umfasst, wobei das Verfahren **dadurch gekennzeichnet ist, dass** es die folgenden Schritte umfasst:
- Durchführen eines Formats, ausgehend von einem Komplex (7), der die Faserschicht und die Unterschicht umfasst,
- Durchführen einer Heißpressung eines Umfangsbandes (6) des Formats, wobei die angewendete Temperatur so definiert ist, dass sie eine unumkehrbare Umfangskomprimierung der Unterschicht ermöglicht,
- Verbinden des Abdeckungsmittels entlang des Umfangsbandes mit dem Format.

2. Verfahren nach Anspruch 1, **dadurch gekennzeichnet, dass** es vorsieht, dass die Faserschicht (2) schmelzbare Fasern umfasst, wobei die Temperatur, die beim Schritt des Heißpressens angewendet wird, so definiert ist, dass sie eine unumkehrbare Kompression der Faserschicht ermöglicht.

3. Teppich (1) in einem Kraftfahrzeug, hergestellt durch ein Verfahren nach einem der Ansprüche 1 oder 2, wobei der Teppich ein Format umfasst, das ein Umfangsband (6) aufweist, das auf unumkehrbare Weise zusammengepresst ist, wobei ein Mittel zur Abdeckung (4) der Kante des Teppichs entlang des Umfangsbandes verbunden ist.
